# EUROPEAN PATENT SPECIFICATION

(11) **EP 4 159 936 B1**
(45) Date of publication and mention of the grant of the patent: **18.03.2026**
(21) Application number: 21739736.3
(22) Date of filing: 02.06.2021
(51) Int. Cl.: E03B 7/07, E03C 1/284

(54) **LIQUID CONVEYANCE ASSEMBLY AND APPARATUS**
FLÜSSIGKEITSFÖRDERANORDNUNG UND -VORRICHTUNG
APPAREIL ET ENSEMBLE D'ACHEMINEMENT DE LIQUIDES

(30) Priority: 02.06.2020 ES 202030517
(43) Date of publication of application: 05.04.2023
(73) Proprietor: SEDAL, S.L.U., 08740 Sant Andreu de la Barca (ES)
(72) Inventor: BELLO LARROCHE, Rafael, 08760 Martorell (ES)
(74) Representative: Ponti & Partners, S.L.P
(86) International application number: PCT/ES2021/070399
(87) International publication number: WO 2021/245312

(56) References cited:
- DE-A1- 102015 006 770
- DE-A1- 102015 113 886

## Description

The present invention relates to an assembly, segment, section or the like for the conveyance of liquids which is coupled to an installation for the conveyance and supply of such liquids, such as a drinking water distribution system, in a vertical or approximately vertical section of the installation, with the liquid entering at the top and leaving at the bottom of the section, which is to be kept, at least in part, flooded.

The present invention also relates to an apparatus installed in a liquid supply installation incorporating a system for measuring the characteristics of the liquid and its flow.

### Background of the invention

Liquid conduits in general and, more commonly and specifically, water supply and drainage installations, integrate systems and devices for measuring the characteristic parameters of the liquid and its flow or transfer at various points in the installation.

Most of these installations have vertical sections and, in some of these sections, it is necessary to install the appropriate measurement systems. This arrangement should not cause any problems in normal operation, but when a flow is stopped or the liquid flow rate is small, drainage of the measuring section may occur, which may cause air to enter the system. This creates a major drawback in this configuration, as the measurement systems will take erroneous measurements when the measurement medium is changed.

A common solution used to keep a liquid distribution pipe section flooded applies the principle of communicating vessels of a siphon. This is done by installing siphon pieces that must be connected to the upstream and downstream sections.

These known configurations have the drawback of requiring more space than is normally needed for the vertical conduit This is because the bends, which are necessary in the conduit to realise the siphon configuration, cause the vertical axis of said conduit to shift as it passes through the siphon, normally losing coaxiality with the vertical axis of the inlet section of the siphon with respect to the vertical axis of the outlet.

This incorporation of a conventional siphon assembly in visible vertical section installations, in addition to taking up more space, also causes aesthetic problems in these visible constructions, as it is not a clean and straight conduit section.

It should also be taken into account that in any installation, especially if the conduit is carried out by joining independent plastic injection moulded parts, which do not admit curves, or only to a very limited extent due to the demoulding requirements in their manufacture, the addition of elements to such an installation implies the existence of joints.

The joints resulting from the incorporation of siphon assemblies, as well as the deviation of the vertical section of the conduits, make the installations more complex and therefore more costly, being more susceptible to breakdowns or impact due to the greater space occupied, and even more so in the way that the conventional siphon does.

This increase in the number of joints in the installation and the greater exposure of the siphon configuration, which occupies a larger space, also creates an increase in possible points of liquid leakage and/or air ingress to these liquid conduit sections, which can create a malfunction in the metering means in that section due to the total or partial loss of its liquid column.

Another consequence of the above-mentioned fluid leakage at these joints is that the risk of fluid leakage to the outside implies a risk of damage to property.

DE 10 2015 113886 shows a liquid conveyance assembly illustrating the general knowledge .

### Description of the invention

The aim of the present invention is to provide a liquid conveyance assembly, as well as to provide an apparatus containing such an assembly, which manages to solve the mentioned drawbacks, presenting other advantages that will be described below.

Firstly, it is the aim to clarify certain terms employed, in order that they should not be interpreted as limitative, or that obvious changes of configuration/application might vary the reference employed in the present description without changing the object of the protection. In particular, it is intended that the liquid conveyance assembly refers to an assembly forming a section, segment or similar part of a conduit incorporating the elements described below to form such a conveyance assembly.

In addition, it should be noted that the preferably vertical orientation indicated above can also have a certain inclination, as long as the siphon fulfils the task of maintaining the flooding of the previous section. In this regard, reference will be made to vertical sections or sections with a vertical component, such that this concept should be understood in the same way. Thus, and in accordance with this objective, with respect to a first aspect, the present invention relates to a liquid conveyance assembly which is installed as part of at least one section with a vertical component in a liquid conveyance installation, where the liquid enters at the top of the assembly and exits at the bottom of the assembly.

This liquid conveyance assembly comprises, advantageously, at least:
- a conduit section with a vertical component; and
- a siphon-effect section coaxial with the previous vertical component section.

The invention is configured in such a way that the siphon-effect section is located downstream of the vertical conduit section, keeping at least the vertical conduit section flooded with liquid.

On the other hand, the invention advantageously has the walls forming the conveyance assembly constituting a single-monolithic piece, also referred to as "single main piece", "single main part" or "single piece", including in said single piece both the vertical front section and the outer wall of the siphon-effect section, as well as the mouth of the central inlet or outlet area, depending on the configuration of the conveyance assembly, of the U-shaped part, also referred to as "U" piece, which is responsible for diverting the liquid forming the different passage sections in the geometry of the siphon-effect section itself. In this way, the conveyance assembly is formed in a single main piece with the coupling of the "U" piece, only requiring coupling of this independent piece of liquid diversion to the single-piece assembly for its complete configuration.

This configuration makes it possible to have a siphon on the same axis, coaxial with the previous vertical component section, by means of a compact conveyance assembly in a single main piece, requiring the coupling of only a single additional independent piece without the need for sealing joints for its completion and correct operation, unlike the pieces that make up the S-shaped assembly of a conventional siphon. The conduit section of vertical component can be minimised in size if it does not incorporate measurement systems in its path, having the means of connection to the rest of the liquid installation prior to it.

The coaxial configuration minimises the space occupied and improves the aesthetics of the section, as the assembly maintains the same axis as the vertical section to which it is coupled and can be integrated into the outer diameter of the conduit that does not have this element.

On the other hand, the same effective siphon height occupies less height in this configuration than in the classic configuration with curves in the conduit. This is achieved thanks to the fact that the inner radii of the curves in the coaxial siphon have the same thickness as the walls of the material, whereas in the conventional configuration known in the state of the art, the conduit has curves of considerable inner radius, so that the conduit assembly described in the present invention is also more compact in height.

Having a single main part, without internal joints and with only one element to be coupled, avoids having joints between parts that could cause leaks, and minimises assembly costs, as it reduces assembly and manufacturing costs by having fewer parts. This minimisation of the risk of leaks due to the absence of joints and connections will also minimise the possibility of air entering and the loss of the liquid column that floods the section before the siphon.

Preferably, the siphon-effect section, formed by the passage sections between the outer wall, the central area mouth and the "U" piece, in addition to a coaxial arrangement with respect to the axis of the section with the previous vertical component, maintains the geometric shape of the cross section of the previous section in its own sections, with said sections being parallel and concentric. This generates the different stages of the siphon-effect part with shapes parallel to the transverse section of the previous vertical section.

According to one embodiment of the invention and with respect to the above coaxial configuration, the siphon-effect section has a geometry of revolution with respect to the axis of the previous vertical component conduit section.

This geometry of revolution of the coaxial siphon-effect section allows having a symmetrical velocity profile with respect to the axis of revolution of the upstream liquid conduit section, which allows a possible installation of metering systems ensuring its proper functioning.

Alternatively, one could have a siphon-effect section which, while maintaining the coaxiality of the vertical section before it, has a non-revolution geometry with respect to the axis of the previous vertical component conduit section. For example, this could be done with polygonal shaped conduit sections, parallel to each other and concentric.

In the latter case, although a totally symmetrical velocity profile is not achieved, in pipes with a non-revolution section, such as a polygonal section, for example, in which the siphon-effect section continues the shape of the previous section, this may be acceptable for certain applications. This alternative shape would allow the shape of the conveyance assembly and, consequently, of the siphon-effect section, to be adapted to external geometrical requirements or to the appropriate integration of measurement systems and devices that are favoured by such non-revolution geometry.

Preferably, and taking advantage of the effect on the velocity profile generated by the previous configurations, the vertical component conduit section incorporates in its own path elements for coupling devices and/or measurement systems associated with the liquid.

These measurement systems, as is well known and as has been indicated, need to take measurements in a section flooded with the liquid they are measuring and preferably with a stable flow velocity profile that is symmetrical with respect to the liquid's axis of motion. The specified configuration allows advantageously to maintain the liquid column covering the section before the siphon where the measurement systems are installed and a stability in the velocity profile that is not disturbed, and does not vary in a relevant way, by the use of the coaxial siphon, everything being contained in the same conveyance assembly.

This configuration manages to keep the liquid flooding the vertical component conduit section prior to the siphon, and also manages to generate a velocity profile with symmetry with respect to the axis of motion of the liquid despite the siphon-effect section. This configuration maintains the symmetry of revolution of this velocity profile even beyond the section of the assembly, in case it is decided to install the measurement systems outside the conveyance assembly, in the upstream sections, as well as in the downstream sections, in the latter case losing the advantage of the siphon, which is the object of the present invention.

The measurement systems that can be attached to the vertical section are at least one of the following devices:
- a temperature sensor;
- a pressure sensor;
- a chemical composition sensor (pH, salinity, water hardness, etc.);
- a flow sensor through the use of a turbine; and/or
- a flow sensor through the use of an ultrasonic transducer system.

In addition to these, other elements necessary for the installation can be coupled and, in particular, those that need to act on the liquid and improve or base its operation on a continuous state of flooding in the liquid.

The coaxial configuration can be carried out in two different ways. A first way, in which the "U" piece is located as a lower valley to collect the liquid descending from the central inlet, channel it through its intermediate crown-shaped passage section and take it to the outlet passage section formed by the outer annular section crown for its exit and continuation through the conveyance installation.

Alternatively, the "U" piece is located as an upper throat to collect the liquid from the inlet to the siphon-effect section through the outer ring section crown, taking it by means of the intermediate crown to the "U" piece which diverts the liquid to the central outlet.

These configurations achieve the coaxial siphon-effect by means of the above-described embodiments.

According to the invention, the outer face of the bottom of the U-piece incorporates, attached to said outer face, at least a part of the measuring systems or of their support and/or coupling elements.

This configuration allows for the incorporation of elements of the measurement system into the independent U-piece that is attached to the conduit assembly, thus eliminating the need for new installation points for the measurement system elements.

Accordingly and preferably, the outer face of the bottom of the U-piece is oriented upstream and has a support for any of the elements forming the parts of a turbine.

This advantageous arrangement allows for a very compact configuration of a conveyance assembly with siphon-effect and a flow meter, also achieving continuity of flow from the annular section of the turbine blades to the outer inlet ring of the siphon-effect section.

Alternatively, part of an ultrasonic flow measurement system, in which a mirror for reflection of the measuring waves is located on the outer face of the U-piece, can be attached.

The siphon-effect section, in its advantageous coaxial configuration of the present invention, describes at least three liquid flow passage sections. The ratio between the surface area of the flow section of each one determines the restriction to the flow of the liquid. On the other hand, having a greater or lesser passage width in each section or passage determines the restriction to the passage of possible particles that may exist in the liquid.

Each of these sectional areas are relative to the cross-sectional area that allows the liquid to flow through each one:
- passage section through the central area, either inlet or outlet, depending on the embodiment in which the entrance to the siphon is made centrally or said central section is used for exit from the siphon-effect section;
- passage section through the intermediate crown on the inner side of the liquid diverter piece to the siphon outlet, U-piece; and
- passage section through the outer crown for either inlet or outlet of the siphon-effect section, depending on the embodiment.

One possible configuration is that the cross-sectional areas in each of the sections of the siphon-effect part have the same cross-sectional area or slightly larger cross-sectional areas in the case of the intermediate and/or outer sections, having an equivalent pressure drop in each section.

These passage sectional areas of each of the passages of equal or slightly larger dimensions in the intermediate and/or outer sections of the areas allow the flow rate to be maximised. The passage sectional areas of the individual passages of the siphon-effect part, with approximately equal areas, must be slightly larger in the intermediate and/or outer passages as the shape aspect is less favourable than in the inner passages for the purpose of head loss of a moving liquid.

Alternatively to the above, the passage width in each of the sections of the siphon-effect part has the same width distance in each of the passage sections, even in the areas of redirection of the liquid flow between the passage sections. This allows maximising the size of solid particle that can pass through the siphon without getting stuck and jamming it.

Preferably, the liquid conveyance assembly has coupling elements at the inlet or outlet, or at both ends of the assembly, for connection to a liquid supply installation.

These characteristics make it possible to obtain a liquid conveyance assembly with a compact configuration, with a minimum number of components and lower manufacturing and installation costs, without the risk of liquid leaks or air entering through it, maintaining the coaxiality of the installation and therefore occupying a minimum of space, offering obvious aesthetic advantages as well as allowing an optimum velocity profile for the installation of measuring systems in the sections before the siphon, despite the siphon device and in some cases even favoured by the siphon device.

In accordance with the aim of the invention, with respect to a second aspect thereof, the invention also relies on an apparatus installed in a liquid supply installation, the apparatus corresponding to an end point of consumption or an apparatus/device installed at an intermediate point in a liquid supply installation, which incorporates the function of measuring characteristics of the liquid passing through it. This apparatus advantageously incorporates a conveyance assembly as described above in a first aspect of the invention.

In this way, devices are obtained that incorporate a conveyance assembly as described above and that advantageously make use of the effects of its configuration. This results in devices that are final liquid consumption points, or that are installed prior to them at intermediate points, where there is a need to have a vertical section flooded for the measurement of parameters associated with the characteristics of the liquid and/or its flow at that consumption point.

### Brief description of the drawings

In order to better understand the description made, a set of drawings has been provided which, schematically and solely by way of non-limiting example, represents several practical examples of embodiment.
Figure 1 is a schematic view of a flow measurement system at an inlet for control of a filling valve of a vented water tank, installed in a water conveyance assembly.
Figure 2 are two partial schematic views in longitudinal section of a conveyance assembly in a preferred embodiment with a bottom siphon U-piece. Figure 2a shows a flow passage surface in each section of the siphon having a similar flow passage cross-sectional area between them. Figure 2b shows a flow passage width in each section similar to each other.
Figure 3 are two partial schematic views in longitudinal section of a conveyance assembly in an alternative embodiment with an upper siphon U-piece. Figure 3a shows a flow passage surface in each section of the siphon having a similar flow passage cross-sectional area between them. Figure 3b shows a flow passage width in each section similar to each other.
Figure 4 is a partial sectional view of a siphon-effect conveyance assembly in which the rotating shaft, or its support, of a turbine (4a) or part of an ultrasonic flow measurement device (4b) is attached to the outer face of the U-piece.

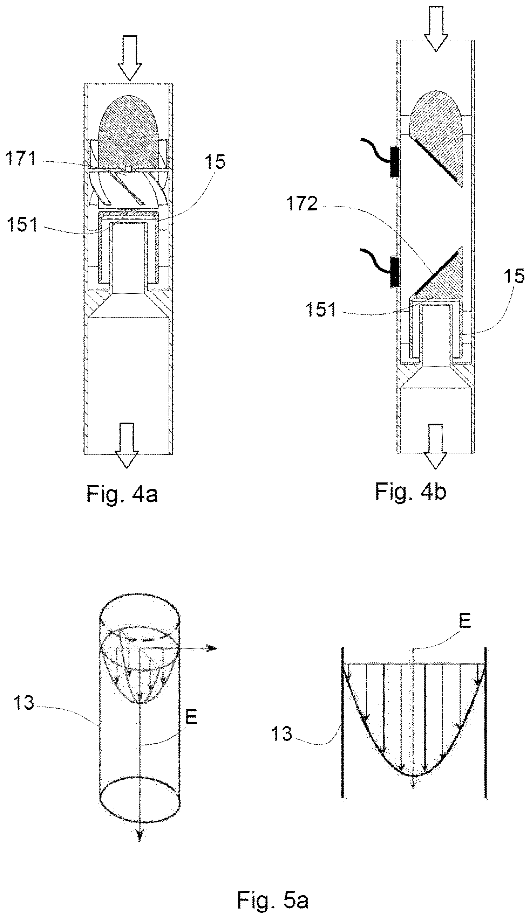

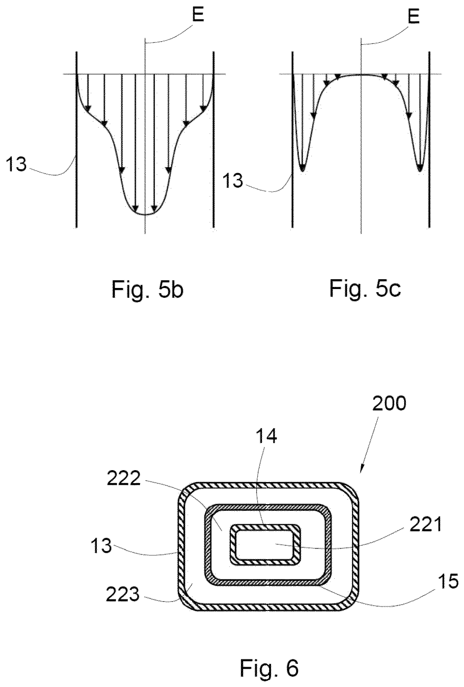

Figure 5 are schematic representations of the axial component of the velocity profile vector in the section of revolution upstream of the siphon-effect section. View 5a shows a representation on a section of revolution which has no intervening elements in the section following its own. View 5b shows a representation of the axial component of the velocity profile vector in a section of revolution that incorporates an entrance to the siphon in its central area in the section after its own. View 5c shows a representation of the axial component of the velocity profile vector in a section of revolution which, in the section following its section, incorporates an entrance to the siphon through its outer crown.
Figure 6 is a schematic cross-section representation of the siphon-effect section, in a polygonal geometry.

### Description of a preferred embodiment

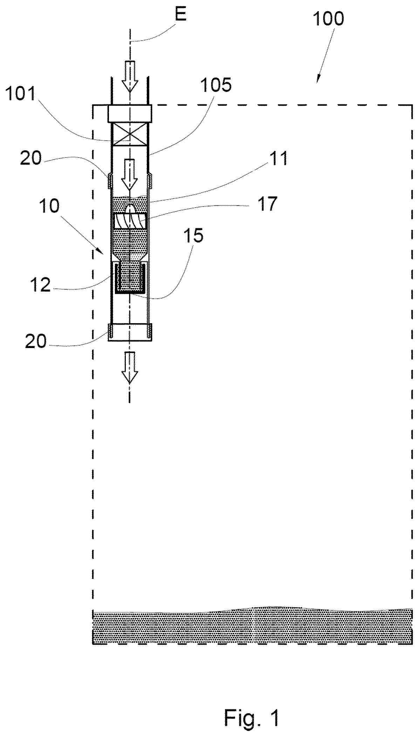

In the present preferred embodiment of the invention, and as shown in figure 1, the water conveyance assembly (10) is installed in a filling system of an apparatus (100) as a water consumption point, in this embodiment a vented water tank. In this embodiment, it is necessary to control the solenoid valve (101) that controls the water flow by measuring the flow rate supplied.

The conveyance assembly (10) is installed in the vertical inner section of the tank downstream of the solenoid valve (101), being fixed by its coupling means (20) to the upstream water conduit sections (105). A measuring system (17) consisting of a turbine flow meter is attached to the vertical section (11). This configuration will ensure that the vertical conduit section (11) is always flooded, even if the vented water filling tank is discharged, so that the turbine will operate permanently flooded.

The conveyance assembly (10), as can be seen in figures 1 to 3, is made up of a main single-piece revolution part, in the form of a cylindrical tube coaxial with the axis (E) of the installation pipe, to which an independent "U" piece (15) is coupled. This main single-piece of revolution is made up of a single-piece part that incorporates the vertical conduit section (11), the outer wall (13) of the siphon-effect section (12), and the mouth of the central area (14), inlet or outlet, depending on the configuration of the assembly (10), of the inner bypass area of the "U" piece (15) of the siphon. The independent "U" piece (15) is fixed to the single-piece part to complete the configuration of the siphon-effect part (12).

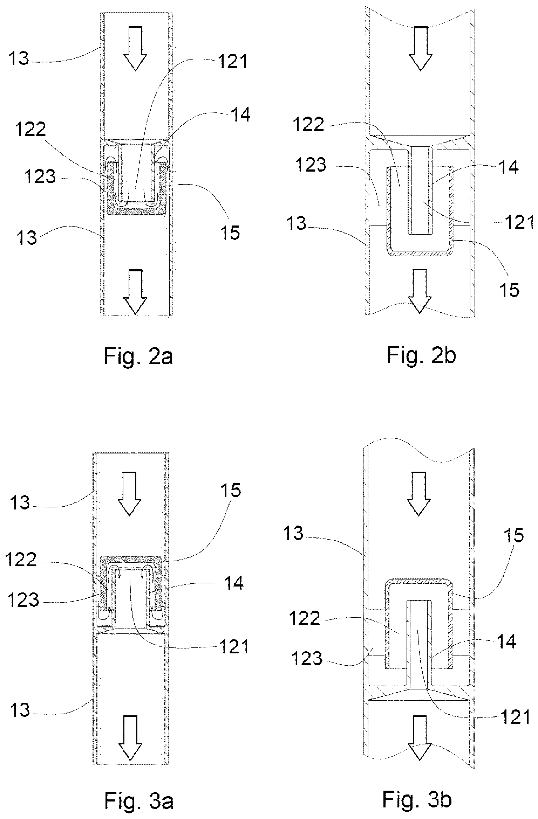

As can be seen in figures 2a and 2b, this "U" piece (15) is arranged in the form of a cylindrical bushing positioned at the bottom, forming a valley. Alternatively, as can be seen in figures 3a and 3b, the conveyance assembly (10) has been configured in reverse, with said piece (15) forming an upper cylindrical throat to divert the water towards the outlet of the siphon-effect section (12).

As shown in the views in figure 2, the water, which enters the conveyance assembly (10) at the top, through the vertical conduit section (11), then reaches the siphon-effect section (12) through the central area mouth (14) which forms the central passage section (121), which acts as an inlet to the "U" piece (15), diverting the water through this "U" piece (15) and carrying it through the passage of the intermediate crown (122) to the passage of the outer outlet crown (123), to continue its course through the tank filling facility (100).

Alternatively, as can be seen in the views of figure 3, the configuration of the siphon-effect section (12) could be carried out by inverting the arrangement, so that the entrance to the siphon-effect section (12) is through the passage of the outer crown (123) so that, through the passage of the intermediate crown (122) it reaches the "U" piece (15), so that the water exits the siphon-effect part (12) through the central passage (121) formed by the central area mouth (14) and continues through the installation.

The flow cross-section surfaces in the above embodiments shown in Figures 2a and 3a are configured so that they can be of slightly larger flow cross-section areas in the outermost passages that have a slightly larger area than the innermost passages, so as to maximise the flow rate in the siphon part section, with a geometric shape that maintains an equivalent head loss in each section.

Alternatively, as can be seen in figures 2b and 3b, the widths of each passage section (121,122, and 123), as well as the passage areas between sections, have at least the same distance between the walls of the elements forming the assembly (10) in the siphon, thus having substantially different passage section areas in each section, but maximising the size of the solid particles that could pass through the siphon-effect section (12) without getting stuck in one of the sections.

According to figure 4a, in the vertical conduit section (11) of the assembly (10) there are some elements (16) for coupling a flow measurement system (17) consisting of a turbine, with its corresponding connection to a control system, not shown in the figures. In this section, the conveyance assembly (10) achieves a symmetrical velocity profile with respect to the axis (E) which forms the body of revolution of the conveyance assembly (10) and which is the axis of water displacement, as can be seen in figure 5b.

In alternative embodiments, temperature probes, pressure sensors, chemical composition sensors, ultrasonic transducers, etc. can be installed.

In this embodiment, as mentioned above, the conveyance assembly is a cylindrical tube (10) and the elements forming the siphon-effect part (12) are also cylindrical, coaxial with the upstream and downstream conduits to which they are coupled. This configuration of revolution with respect to the axis of the installation in this section allows maintaining a symmetry of the velocity profile with respect to this axis before and after the siphon itself, as shown in the views in figure 5.

Figure 5a shows the velocity profile of a line of revolution with no downstream element, showing its symmetry with respect to the axis of revolution. In the embodiment in which the water inlet to the siphon-effect section (12) is through the central area (121), as shown in figure 5b, the symmetrical velocity profile with respect to the axis of revolution of the section is maintained, but its shape is altered in consequence of the downstream obstacles. In the embodiment in which the water inlet to the siphon-effect section (12) is through the outer crown (123), as shown in figure 5c, the symmetrical profile of velocities with respect to the axis of revolution of the section is maintained, but its shape is altered in consequence of the downstream obstacles.

The configuration of revolution of the assembly can be modified in alternative embodiments, having polygonal cross sections, for example, as can be seen in figure 6. These sections (221,222, 223) of the siphon-effect section (200) of alternative section would run parallel to the shapes of the cross section of the previous vertical section, making crowns with the shape of the reference section in order to assimilate the operation to the previous preferred embodiments.

Alternatively, as can be seen in figures 4a and 4b, the conveyance assembly (10) can be provided with a coupling for a measuring system (17) on the outer face (151) of the independent part for diverting the liquid towards the outlet of the siphon, i.e. the "U" part (15).

As can be seen in figure 4a, the outer face (151) is used as an anchor for the rear rotating shaft of a turbine rotor (171), achieving continuity of flow from the annular section of the turbine blades and the outer inlet ring to the siphon.

Alternatively, as shown in figure 4b, only part of the measuring system (17), in this case one of the wave reflection elements (172) for an ultrasonic measuring system, is installed on the outer face (151).

Although reference has been made to a specific embodiment of the invention, it is obvious to a person skilled in the art that the liquid conveyance assembly, as well as the apparatus comprising it, are susceptible to numerous variations and modifications, and that all the details mentioned may be substituted by other technically equivalent ones, without departing from the scope of protection defined by the appended claims.

## Claims

1. Liquid conveyance assembly, of the type installed as at least part of a section with a vertical component in a liquid conveyance installation, in which the liquid enters through an upper part of the assembly and exits through a lower part of the same, wherein the assembly (10) comprises, at least:
- a conduit section with a vertical component (11); and
- a siphon-effect section (12, 200) coaxial with the aforementioned vertical component section (11);
wherein, the siphon-effect section (12, 200) is downstream of the vertical component conduit section (11);
where walls forming the conveyance assembly constitute a single-monolithic piece, including in said single -monolithic
piece both the vertical component section (11) of the assembly and an outer wall (13) of the siphon-effect section (12, 200), as well as a central area mouth (14), where the central area mouth (14) acts as an inlet or outlet of a U-shaped part (15), having only this independent U-shaped part (15) for diverting the liquid towards the outlet of the siphon, wherein the different passage sections (121-123, 221-223) in the geometry of the siphon-effect section (12, 200) are formed by the single -monolithic piece with the coupling of the U-shaped part (15); and
**characterised in that** an outer face (151) of the bottom of the U-shaped part (15) incorporates, attached to said outer face (151), at least a part of the measuring systems (17) or of their support and/or coupling elements.

2. Liquid conveyance assembly according to claim 1, wherein the siphon-effect section (12,200) has a coaxial arrangement with respect to the axis (E) of the previous section with vertical component (11), maintaining in its own sections (121-123, 221-223) the geometric shape of the cross section of the previous section (11), the said sections (121-123, 221-223) extending in a parallel and concentric manner.

3. Liquid conveyance assembly according to claim 2, wherein the siphon-effect section (12) has a geometry of revolution with respect to the axis of the previous conduit section with vertical component (11).

4. Liquid conveyance assembly according to claim 2, wherein the siphon-effect section (12) has a non-revolution geometry with respect to the axis of the previous conduit section with vertical component (11).

5. Liquid conveyance assembly, according to any of the previous claims, where the vertical component conduit section (11) incorporates in its own path elements (16) for coupling devices and/or measurement systems (17) associated with the liquid.

6. Liquid conveyance assembly according to claim 5, wherein the measurement systems (17) that are attached to the conduit section with vertical component (11) are at least one of the following measurement devices:
- a temperature sensor;
- a pressure sensor;
- a chemical composition sensor (pH, salinity, water hardness, etc.);
- a flow sensor through the use of a turbine; and/or
- a flow sensor through the use of an ultrasonic transducer system.

7. Liquid conveyance assembly, according to any of the previous claims, where the U-shaped part (15) is situated as a lower valley to collect the descending liquid from the central area mouth (14), through its central passage section (121) and take it to the outlet passage section formed by the crown (123) of external annular section, through the intermediate crown (122).

8. Liquid conveyance assembly, according to any of claims 1 to 6, where the U-shaped part (15) is situated as an upper throat, to collect the liquid that enters the siphon-effect section (12) through the outer ring section crown (123) and conduct it, by means of the intermediate crown (122), to said "U" piece that diverts the liquid to the central outlet passage (121) formed by the central area mouth (14).

9. Liquid conveyance assembly according to claim 1, wherein the outer face (151) of the bottom of the U-shaped part (15) is oriented upstream and has a support for any of the elements forming the parts of a turbine (171).

10. Liquid conveyance assembly according to claim 1, wherein the outer face (151) of the bottom of the U-shaped part (15) is oriented upstream and has a support to which a wave reflection element (172) of an ultrasonic measuring system is attached.

11. Liquid conveyance assembly, according to any of the previous claims, where the cross-sectional areas of each of the sections (121,122,123) of the siphon-effect part (12) have the same cross-sectional area or slightly larger in the case of the intermediate and/or outer sections, having an equivalent pressure drop in each section.

12. Liquid conveyance assembly according to any of claims 1 to 11, wherein the passage width in each of the sections (121, 122, and 123) of the siphon-effect part (12) has the same width distance in each passage section, even in the areas of redirection of the liquid flow between passage sections.

13. Liquid conveyance assembly according to any of the preceding claims, wherein the liquid conveyance assembly (10) has coupling elements (20) at the inlet or outlet or at both ends of the assembly (10) for connection to a liquid supply installation.

14. Liquid installation apparatus, of the type used as end-point consumption apparatus or as intermediate measuring apparatus in a liquid supply installation, **characterised in that** the apparatus (100) incorporates a liquid conveyance assembly (10) as described in claims 1 to 13.

## Patentansprüche

1. Flüssigkeitsförderanordnung des Typs, der zumindest als Teil eines Abschnitts mit einer vertikalen Komponente in einer Flüssigkeitsförderinstallation installiert ist, in der die Flüssigkeit durch einen oberen Teil der Anordnung eintritt und durch einen unteren Teil derselben austritt, wobei die Anordnung (10) zumindest umfasst:
- einen Rohrleitungsabschnitt mit einer vertikalen Komponente (11); und
- einen Siphonwirkungsabschnitt (12, 200), der koaxial mit dem vorher erwähnten Abschnitt (11) mit vertikaler Komponente ist;
wobei sich der Siphonwirkungsabschnitt (12, 200) stromabwärts des Rohrleitungsabschnitts (11) mit der vertikalen Komponente befindet;
wobei Wände, die die Förderanordnung bilden, ein einteiliges, monolithisches Stück darstellen, wobei in dem einteiligen, monolithischen Stück sowohl der Abschnitt (11) mit vertikaler Komponente der Anordnung als auch eine äußere Wand (13) des Siphonwirkungsabschnitts (12, 200) sowie eine Zentralbereichsmündung (14) enthalten ist, wobei die Zentralbereichsmündung (14) als ein Einlass oder ein Auslass eines U-förmigen Teils (15) wirkt, die nur dieses unabhängige U-förmige Teil (15) zum Umleiten der Flüssigkeit zu dem Auslass des Siphons hin aufweist, wobei die unterschiedlichen Durchgangsabschnitte (121-123, 221-223) in der Geometrie des Siphonwirkungsabschnitts (12, 200) durch das einteilige, monolithische Stück mit der Kopplung des U-förmigen Teils (15) gebildet sind; und
**dadurch gekennzeichnet, dass** eine Außenfläche (151) des Bodens des U-förmigen Teils (15) zumindest einen Teil der Messsysteme (17) oder deren Träger und/oder Kopplungselemente, die an der Außenfläche (151) befestigt sind, einschließt.

2. Flüssigkeitsförderanordnung nach Anspruch 1, wobei der Siphonwirkungsabschnitt (12, 200) eine koaxiale Anordnung bezüglich der Achse (E) des vorhergehenden Abschnitts (11) mit vertikaler Komponente aufweist und in seinen eigenen Abschnitten (121-123, 221-223) die geometrische Form des Querschnitts des vorhergehenden Abschnitts (11) beibehält, wobei die Abschnitte (121-123, 221-223) parallel und konzentrisch verlaufen.

3. Flüssigkeitsförderanordnung nach Anspruch 2, wobei der Siphonwirkungsabschnitt (12) eine Rotationsgeometrie bezüglich der Achse des vorhergehenden Rohrleitungsabschnitts (11) mit vertikaler Komponente aufweist.

4. Flüssigkeitsförderanordnung nach Anspruch 2, wobei der Siphonwirkungsabschnitt (12) eine Nicht-Rotationsgeometrie bezüglich der Achse des vorhergehenden Rohrleitungsabschnitts (11) mit vertikaler Komponente aufweist.

5. Flüssigkeitsförderanordnung nach einem der vorhergehenden Ansprüche, wobei der Rohrleitungsabschnitt (11) mit vertikaler Komponente in seinem eigenen Pfad Elemente (16) zum Koppeln von Vorrichtungen und/oder Messsystemen (17), die der Flüssigkeit zugeordnet sind, enthält.

6. Flüssigkeitsförderanordnung nach Anspruch 5, wobei die Messsysteme (17), die an dem Rohrleitungsabschnitt (11) mit vertikaler Komponente befestigt sind, mindestens eine der folgenden Messvorrichtungen sind:
- ein Temperatursensor;
- ein Drucksensor;
- ein Sensor für die chemische Zusammensetzung (pH, Salzgehalt, Wasserhärtegrad usw.);
- ein Durchflusssensor unter der Verwendung einer Turbine; und/oder
- ein Durchflusssensor unter der Verwendung eines Ultraschallwandlersystems.

7. Flüssigkeitsförderanordnung nach einem der vorhergehenden Ansprüche, wobei das U-förmige Teil (15) als ein unteres Tal angeordnet ist, um die absteigende Flüssigkeit von der Zentralbereichsmündung (14), durch deren zentralen Durchgangsabschnitt (121), zu sammeln und um sie durch die Zwischenkrone (122) zu dem Auslassdurchgangsabschnitt zu bringen, der durch die Krone (123) des Außenringabschnitts gebildet ist.

8. Flüssigkeitsförderanordnung nach einem der Ansprüche 1 bis 6, wobei das U-förmige Teil (15) als ein oberer Hals angeordnet ist, um die Flüssigkeit, die in den Siphonwirkungsabschnitt (12) eintritt, durch die Außenringabschnittskrone (123) zu sammeln und sie mittels der Zwischenkrone (122) zu dem "U"-Teil zu leiten, das die Flüssigkeit zu dem zentralen Auslassdurchgang (121), der durch die Zentralbereichsmündung gebildet ist, umleitet.

9. Flüssigkeitsförderanordnung nach Anspruch 1, wobei die Außenfläche (151) des Bodens des U-förmigen Teils (15) stromaufwärts orientiert ist und einen Träger für eines der Elemente, die die Teile einer Turbine (171) bilden, aufweist.

10. Flüssigkeitsförderanordnung nach Anspruch 1, wobei die Außenfläche (151) des Bodens des U-förmigen Teils (15) stromaufwärts orientiert ist und einen Träger aufweist, an dem ein Wellenreflexionselement (172) eines Ultraschallmesssystems angebracht ist.

11. Flüssigkeitsförderanordnung nach einem der vorhergehenden Ansprüche, wobei die Querschnittsflächen jedes der Abschnitte (121, 122, 123) des Siphonwirkungsteils (12) dieselbe Querschnittsfläche oder in dem Fall der Zwischen- und/oder Außenabschnitte eine geringfügig größere Querschnittsfläche aufweisen und in jedem Abschnitt einen äquivalenten Druckabfall aufweisen.

12. Flüssigkeitsförderanordnung nach einem der Ansprüche 1 bis 11, wobei die Durchgangsbreite in jedem der Abschnitte (121, 122 und 123) des Siphonwirkungsteils (12) in jedem Durchgangsabschnitt, selbst in den Bereichen zur Umlenkung des Flüssigkeitsstroms zwischen Durchgangsabschnitten, denselben Breitenabstand aufweist.

13. Flüssigkeitsförderanordnung nach einem der vorhergehenden Ansprüche, wobei die Flüssigkeitsförderanordnung (10) an dem Einlass oder Auslass oder an beiden Enden der Anordnung (10) Kopplungselemente (20) zur Verbindung mit einer Flüssigkeitszufuhrinstallation aufweist.

14. Flüssigkeitsinstallationsvorrichtung des Typs, der als eine Endpunkt-Verbrauchsvorrichtung oder als Zwischenmessvorrichtung in einer Flüssigkeitszufuhrinstallation verwendet wird, **dadurch gekennzeichnet, dass** die Vorrichtung (100) eine Flüssigkeitsförderanordnung (10) nach den Ansprüchen 1 bis 13 enthält.

## Revendications

1. Ensemble de transport de liquide, du type installé comme au moins une partie d'une section ayant une composante verticale dans une installation de transport de liquide, dans lequel le liquide entre par une partie supérieure de l'ensemble et sort par une partie inférieure de celui-ci, dans lequel l'ensemble (10) comprend, au moins :
- une section de conduite ayant une composante verticale (11) ; et
- une section à effet de siphon (12, 200) coaxiale avec la section susmentionnée à composante verticale (11) susmentionnée ;
dans lequel la section à effet de siphon (12, 200) se situe en aval de la section de conduite à composante verticale (11) ;
où les parois formant l'ensemble de transport constituent une pièce monolithique unique, comprenant dans ladite pièce monolithique unique
à la fois la section à composante verticale (11) de l'ensemble et une paroi extérieure (13) de la section à effet de siphon (12, 200), ainsi qu'une embouchure centrale (14), où l'embouchure centrale (14) agit comme une entrée ou une sortie d'une partie en forme de U (15), ayant uniquement cette partie en forme de U (15) indépendante pour dévier le liquide vers la sortie du siphon, dans lequel les différentes sections de passage (121 à 123, 221 à 223) dans la géométrie de la section à effet de siphon (12, 200) sont formées par la pièce monolithique unique avec le couplage de la partie en forme de U (15) ; et
**caractérisé en ce qu'**une face extérieure (151) du fond de la pièce en forme de U (15) incorpore, fixée à ladite face extérieure (151), au moins une partie des systèmes de mesure (17) ou de leurs éléments de support et/ou de couplage.

2. Ensemble de transport de liquide selon la revendication 1, dans lequel la section à effet de siphon (12, 200) a un agencement coaxial par rapport à l'axe (E) de la section précédente à composante verticale (11), en conservant dans ses propres sections (121 à 123, 221 à 223) la forme géométrique de la section transversale de la section (11) précédente, lesdites sections (121 à 123, 221 à 223) s'étendant de manière parallèle et concentrique.

3. Ensemble de transport de liquide selon la revendication 2, dans lequel la section à effet de siphon (12) a une géométrie de révolution par rapport à l'axe de la section de conduite à composante verticale (11) précédente.

4. Ensemble de transport de liquide selon la revendication 2, dans lequel la section à effet de siphon (12) a une géométrie de non-révolution par rapport à l'axe de la section de conduite à composante verticale (11) précédente.

5. Ensemble de transport de liquide, selon l'une quelconque des revendications précédentes, dans lequel la section de conduite à composante verticale (11) incorpore dans son propre parcours des éléments (16) pour le couplage de dispositifs et/ou de systèmes de mesure (17) associés au liquide.

6. Ensemble de transport de liquide selon la revendication 5, dans lequel les systèmes de mesure (17) qui sont fixés à la section de conduite à composante verticale (11) sont au moins l'un des dispositifs de mesure suivants :
- un capteur de température ;
- un capteur de pression ;
- un capteur de composition chimique (pH, salinité, dureté de l'eau, etc.) ;
- un capteur de débit par l'intermédiaire de l'utilisation d'une turbine ; et/ou
- un capteur de débit par l'intermédiaire de l'utilisation d'un système de transducteur à ultrasons.

7. Ensemble de transport de liquide, selon l'une quelconque des revendications précédentes, où la partie en forme de U
(15) est située comme un creux inférieur pour recueillir le liquide descendant de l'embouchure centrale (14), à travers sa section de passage centrale (121) et l'amener à la section de passage de sortie formée par la couronne (123) de section annulaire extérieure, à travers la couronne intermédiaire (122).

8. Ensemble de transport de liquide, selon l'une quelconque des revendications 1 à 6, où la partie en forme de U (15)
est située comme une gorge supérieure, pour recueillir le liquide qui entre dans la section à effet de siphon (12) par la couronne de section annulaire extérieure (123) et le conduire, au moyen de la couronne intermédiaire (122), à ladite pièce en « U » qui dévie le liquide vers le passage de sortie central (121) formé par l'embouchure centrale (14).

9. Ensemble de transport de liquide selon la revendication 1, dans lequel la face extérieure (151) du fond de la partie en forme de U
(15) est orientée vers l'amont et comporte un support pour l'un quelconque des éléments constituant les parties d'une turbine (171).

10. Ensemble de transport de liquide selon la revendication 1, dans lequel la face extérieure (151) du fond de la partie en forme de U
(15) est orientée vers l'amont et comporte un support auquel est fixé un élément de réflexion d'onde (172) d'un système de mesure à ultrasons.

11. Ensemble de transport de liquide, selon l'une quelconque des revendications précédentes, dans lequel les surfaces de section transversale de chacune des sections (121, 122, 123) de la partie à effet de siphon (12) sont identiques ou légèrement plus grandes dans le cas des sections intermédiaires et/ou extérieures, présentant une chute de pression équivalente dans chaque section.

12. Ensemble de transport de liquide selon l'une quelconque des revendications 1 à 11, dans lequel la largeur de passage dans chacune des sections (121, 122 et 123) de la partie à effet de siphon (12) est la même dans chaque section de passage, y compris dans les zones où le flux de liquide est redirigé entre les sections de passage.

13. Ensemble de transport de liquide selon l'une quelconque des revendications précédentes, dans lequel l'ensemble de transport de liquide (10) comporte des éléments de couplage (20) à l'entrée ou à la sortie ou aux deux extrémités de l'ensemble de transport de liquide (10) pour la connexion à une installation d'alimentation en liquide.

14. Appareil d'installation de liquide, du type utilisé comme appareil de consommation au point final ou comme appareil de mesure intermédiaire dans une installation d'alimentation en liquide, **caractérisé en ce que** l'appareil (100) incorpore un ensemble de transport de liquide (10) selon les revendications 1 à 13.
